# EUROPEAN PATENT APPLICATION

(11) **EP 0 784 157 A1**
(43) Date of publication of application: **16.07.1997**
(21) Application number: 95914358.7
(22) Date of filing: 03.04.1995
(51) Int. Cl.: F03G 6/00, F01K 23/10

(54) **SYSTEM FOR THE INTEGRATION OF SOLAR ENERGY IN A CONVENTIONAL THERMAL POWER PLANT GENERATING ELECTRIC ENERGY**

(71) Applicant: Compania Sevillana de Electricidad, 41004 Sevilla (ES)
(72) Inventor: LARA CRUZ, Antonio, E-41004 Sevilla (ES)
(74) Representative: Perez Bonal, Bernardo
(86) International application number: ES9500036
(87) International publication number: WO9631697

(57) **Abstract**

The purpose is to integrate solar energy obtained through a solar receiver and a heliostat field, at already existing thermal power plants, whether fitted with gas turbines or not, integration that is effected conditioning the steam produced by the solar boiler to the conditions of the steam turbine, for which purpose are used the exhaust gases of a gas turbine and may be performed either within or outside the boiler of the thermal power plant, in the first such case the solar boiler steam is introduced into the main boiler overheater and the exhaust gases in its convection area and/or blast tank, whereas in the second case the exhaust gasses pass through a recovery boiler before arriving at the blast tank, similarly to the steam produced in the solar boiler.

## Description

### OBJECT OF THE INVENTION

This invention refers to a system for the integration of solar energy at a conventional thermal electric power generation plant, for the purpose of increasing the yield of said power plants and therefore, to reduce fuel consumption and, as a direct consequence thereof, to also contribute towards the reduction of environmental contamination.

Basically the proposal consists of the modification of already existing thermal electric power generation plants for the integration of solar energy input, based on the heliostat and solar receiver technology field, using a gas turbine for that purpose.

### BACKGROUND OF THE INVENTION

There currently are several systems that use thermal energy for the generation of electric power. All of them are based on the concentration of solar rays for the production of steam, either directly or using an intermediate fluid that is heated by solar energy and which then transfers this thermal energy on to the water.

The steam so generated, which is in saturated condition, may then be expanded inside a steam turbine in order to generate electric power.

Due to thermodynamic and turbine performance reasons, the thermal to electric power transformation yield increases if the steam input into the steam turbine is overheated. Either solar energy or power supplied by petroleum based fuels may be used for this purpose. There are several configurations in this regard which are basically differentiated by either burning the fuel inside a boiler or by burning it inside the combustion chamber of a gas turbine.

In the former case, the boiler may be used to overheat steam generated by the solar energy system or, acting in parallel with the solar energy system, to complement said solar energy system for operation under conditions of low solar radiation levels. The main problems posed by this solution is the high level of resources that need to be invested per installed electric power output unit, which causes these power plants to be uncompetitive when compare to other electric power generation means.

In the second case, the configuration of the plant normally corresponds to a combined cycle power plant in which the gas turbine exhaust gases are made to pass through a recovery boiler where overheated steam is generated. The thermal input contributed by solar energy is then used to make good part of the processes that take place inside the recovery boiler: water heating - steam formation - overheating, being the result of the assembly an increase of generated overheated steam and, because of that, an increase of electric power generated by the steam turbine. This solution causes electric power generation cost per installed electric power output unit to be substantially lower than for the previously described boiler systems, but has the following disadvantages:
- It requires the construction of a combined cycle plant, which means a substantial increase of required investment.
- Power yield supplied by solar energy is very small in relation to the power supplied by petroleum based fuels (between 5% and 20%).
- The steam turbine works under widely variable operating regimes, which causes its performance to decrease.
- It is necessary to over-design several combined cycle plant items, such as the steam recovery boiler, the gas turbine and the condenser.

### DESCRIPTION OF THE INVENTION

The power integration system advanced by this invention has been designed to successfully solve the previously described problems, thus allowing a total integration between power generated by petroleum based fuels and solar energy.

The repeated integration of solar energy may be effected either inside the boiler or else outside it, but always with the aid of a gas turbine, so that the steam generated inside the solar boiler would then acquire the conditions needed to be used by the steam turbine.

In the first such case, the steam generated at the solar receiver is injected in the boiler so that it mixes with the steam generated in the boiler drum, so that steam overheats inside the boiler until it reaches the temperature conditions required by the steam turbine.

The water flow directed to the solar boiler shall be governed by the level of solar energy contribution at any given time, so that there will be no flow at night time or whenever there is no sunshine, and it will be at its peak whenever solar yield is maximized, effecting in all cases, in order to increase performance, an extraction of water at the outlet of the central boiler economizer, which is them pumped towards the solar receiver.

The previously described scheme causes an unbalance of the boiler in respect to the current situation, as it requires a lesser power contribution at the evaporator, which is achieved lowering boiler fuel supply, although it requires the same contribution of power at the overheater and superheater areas.

To solve this, or what would amount to the same, to be able to integrate the solar energy inside the boiler, there is a gas turbine, which exhaust gases are introduced into the thermal power plant boiler, so that it would then be balanced and capable of carrying out the processes not performed by the solar section nor by the petroleum based fuel.

The integration of the gas turbine into the power plant boiler may be effected in two different ways, which are as follows:
1st.- Introducing directly the gas turbine exhaust gases inside the boiler convection area.
   Whenever solar power contribution is lesser than specified, less steam is then generated by the solar boiler, so that less power is required to overheat and superheat the steam. Under these operating modes, part of the gas turbine exhaust gases are directed to the blast tank of the conventional boiler, replacing part of the combustion air. Exhaust gas contribution is directly reflected in fuel saving.
   The volume of exhaust gases directed to the blast tank of the conventional boiler is determined by the thermal energy requirements at the boiler convection area. During night time operation or during days of low solar radiation levels, all exhaust gases are directed to the boiler blast tank.
2nd.- Direct introduction of gas turbine exhaust gases inside the blast tank of the conventional boiler, so that the combustion energy of said gases are naturally distributed inside the boiler.

The theoretical and practical results of this second option are identical to those of the first option, but with the added advantage that it does not require any kind of gas distribution system, which at those temperature and pressure levels are not properly developed.

This configuration, the introduction of exhaust gases inside the blast tank (there currently are plants in operation), produces an increase of the temperature of the boiler gases in the overheater and superheater areas. Whenever part of the evaporation is performed in the solar receiver, this effect increases, which happens to be beneficial to overheat and superheat the solar steam. Thus, there always is a proper distribution of energy in each area of the boiler for different solar contribution levels.

Regarding integration outside the boiler, it is effected using an additional recovery boiler, where both solar boiler steam and gas turbine exhaust gases are input, causing water steam to overheat inside this recovery boiler until it reaches the conditions required for its use by the steam turbine.

This overheated steam is then added to that supplied by the overheater of the main boiler, whereas the gas turbine gases output by this new boiler are introduced into the blast tank of the main boiler. This system is required for the conditioning of power plants which, due to their specific conditions and/or those of the solar field, are unable to overheat all the steam in the main boiler.

The substitution of combustion air of the power plant boiler by gas turbine exhaust gases cause the redundancy of the air heater currently fitted at the boiler output. In its place there is a high pressure economizer, installed in parallel with the fifth and sixth boiler feed water heater, towards which part of the water flow is directed, and a low pressure economizer, installed in parallel with the second and third condensate water heaters. The water flow directed to each economizer shall be regulated in order to maximize the use of thermal energy given off by the combustion gases.

Water heating in these economizers cause steam flow to decrease at steam turbine outlets. As a consequence of this, it is necessary to reduce the steam fed to the turbine in order to avoid an excessive overload at the steam turbine exhaust, which means that the electric power generated in said turbine decreases.

### DESCRIPTION OF THE DRAWINGS

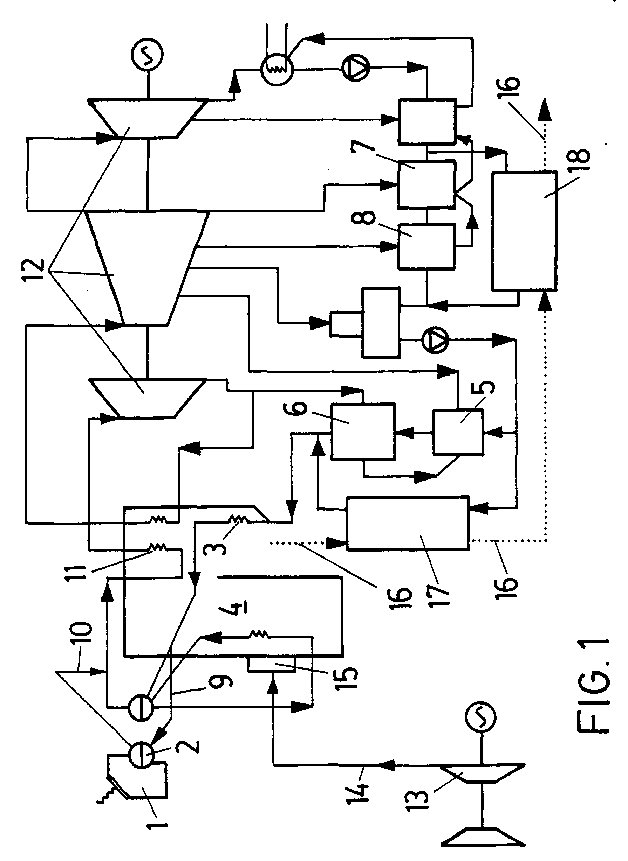

In order to complement the description being effected and with the aim of aiding towards a better understanding of the features of the invention, this patent specification includes, as an integral part thereof, a set of drawings which figure 1 represents the scheme of a thermal plant for the production of electric power, with the addition of a solar boiler, and with the introduction of the gas turbine exhaust gases into the blast tank of the main boiler.

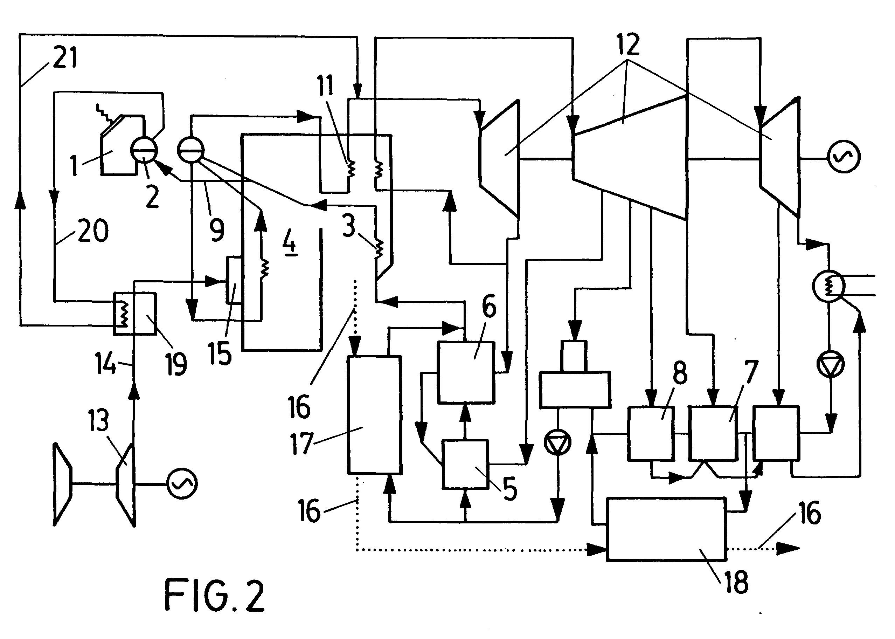

Figure 2 schematically represents the plant in which the integration of power is effected outside the boiler.

### PREFERRED EXECUTIONS OF THE INVENTION

As previously explained in the recitals portion of this patent specification, the gas turbine is the element that integrates the solar energy with petroleum product based energy, so that it must be included in order to properly fulfill the proposal, should the power plant not have one already, as is commonly the case.

Thus, the electric power plant represented in figure 1 integrates the solar energy with the energy based on petroleum products inside the boiler, so that the solar power plant (1) and its boiler (2) receive hot water from the economizer (3) of the boiler (4) of the power plant, through its inlet (9).

This water that arrives at the boiler (2) tends to be at a temperature higher than 272°C and is heated up to 318°C and introduced through the inlet (10) into the overheater area (11), where it is then overheated up to 538°C and 101 bar, together with the remaining steam generated at the boiler (4), being thus readied for its use in the steam turbine (12).

On the other hand, the gas turbine (13) contributes its exhaust gases to the blast tank (15) through the conduit (14).

Another execution option would refer to those power plants that, because of their specific conditions and/or because of those pertaining to the solar field, it is not possible to overheat all the steam in the main boiler, so that the integration is then effected outside it.

In this case, a new boiler or recovery boiler (19) is then arranged where the solar originated steam supplied through the conduit (20) is overheated by the energy supplying action of the gas turbine exhaust gases (13), up to the conditions required by the steam turbine (12), to which it then arrives added to that originated at the main boiler (4), by the conduit (21).

As in the previous option, the gas turbine (13) exhaust gases (14) at the recovery boiler (19) outlet are then introduced into the blast tank (15).

In all cases and as a consequence of the thermal fluctuations that take place inside the boiler (4), the fume outlet temperature (16) resulting from the combustion that takes place inside the boiler (4), does also experience fluctuations that may be used up by a high pressure economizer (17) installed in parallel with the fifth (5) and sixth (6) water heater feeding the boiler (4), being it capable of reaching a temperature of between 200 and 230°C. As even so the economizer (17) gas outlet temperature tends to be around 147°C, a new low pressure economiser (18) is then fitted in parallel with the second (7) and third (8) condensate water condensers.

In order to analyze the higher level of performance experienced at electric power plants through the contribution of solar energy, there is a comparative listing below of performance data obtained from a power plant currently in operation at Huelva (Spain) against that obtained through the integration of solar energy, as per option 2 of energy integration inside the boiler.

### CURRENTLY OPERATING POWER PLANT

| | |
|---|---|
| Boiler fuel: Distillate, gas, coal. | |
| Steam cycle with intermediate superheating. | |
| Electric power at alternator terminals: | 68.4 MW |
| Fuel thermal power o/PCI: | 178.6 MWt |
| Gross electric performance o/PCI: | 38.3% |
| Steam generated in the boiler: | 60.5 kg/s |
| | 110 bar |
| Steam turbine inlet steam: | 60 kg/s |
| | 101 bar |
| | 538°C |

### OPERATION WITH SUNSHINE

The main cycle parameters as per the calculations previously effected are:

| | |
|---|---|
| Power at steam turbine: | 59.4 MW |
| Gas turbine power: | 23.7 Mw |
| Boiler fuel consumption o/PCI: | 104.9 MWt |
| Gas turbine fuel consumption: | 70.0 MWt |
| Gross performance o/PCI: | 47.3% |
| Gas turbine exhaust gas flow: | 78.5 kg/s |
| Exhaust gas temperature: | 540°C |
| Steam flow at steam turbine inlet: | 45.28 kg/s |
| Steam generated in solar boiler: | 13.9 kg/s |
| Thermal energy absorbed by the fluid in the solar boiler: | 21 MWt |

### OPERATION WITHOUT SUNSHINE

The main cycle parameters under this operating method are:

| | |
|---|---|
| Power at steam turbine: | 59.4 MW |
| Gas turbine power: | 23.7 MW |
| Boiler fuel consumption o/PCI: | 127 MWt |
| Gas turbine fuel consumption: | 70.0 MWt |
| Gross performance o/PCI: | 41.9% |
| Gas turbine exhaust gas flow: | 78.5 kg/s |
| Exhaust gas temperature: | 540°C |
| Steam flow at steam turbine inlet: | 45.28 kg/s |
| Steam generated in solar boiler: | 0 kg/s |

It is not considered necessary to extend this description any further in order to enable any expert in the art to understand the scope of the invention and the advantages derived therefrom.

The materials, shape, size and arrangement of the elements may be changed as long as any such change does not alter the essential features of the invention.

The terms used to describe this specification must always be interpreted in a wide, and not limitative, sense.

## Claims

1. System for the integration of solar energy in a conventional electricity generation thermal power plant which, capable of jointly using solar and conventional energies and of being used at already existing power plants whether fitted with gas turbines or not, essentially characterized in that the integration may be effected within or without the main boiler (4), but always using the exhaust gases of a gas turbine (13) to condition the solar boiler (2) steam to the requirements of the steam turbine (12), arranging in the first such case that said gases (14) be regularly and simultaneously introduced in the boiler (4) convention area and in its blast tank (15) and more advantageously in said blast tank (15) only, whereas in the external integration, said gases (14) are first introduced in a recovery boiler (19) and later in the blast tank, expecting the steam generated in the solar boiler (2) to be added to that of the boiler (4) before the overheater (11) in the first case, and at the outlet of the overheater after passing through the recovery boiler (19) in the second such case.

2. System for the integration of solar energy in a conventional electricity generation thermal power plant, according to claim 1 above, characterized in that the water that arrives at the solar boiler (2), does in all cases come from the economiser (3) of the main boiler (4).
